# EUROPEAN PATENT APPLICATION

(11) **EP 3 757 834 A1**
(43) Date of publication of application: **30.12.2020**
(21) Application number: 20164428.3
(22) Date of filing: 20.03.2020
(51) Int. Cl.: G06F 21/55

(54) **METHODS AND APPARATUS TO ANALYZE COMPUTER SYSTEM ATTACK MECHANISMS**

(30) Priority: 27.06.2019 US 201916455473
(71) Applicant: Intel Corporation, Santa Clara, CA 95054 (US)
(72) Inventor: MATHUR, Rachit, Santa Clara, CA 95054 (US); TRAW, Brendan, Santa Clara, CA 95054 (US); GOTTSCHLICH, Justin, Santa Clara, CA 95054 (US)
(74) Representative: Rummler, Felix

(57) **Abstract**

Methods, apparatus, systems and articles of manufacture are disclosed that analyze computer system attack mechanisms. An example apparatus includes a graph generator utilizing a natural language processing model to generate a graph based on a publication, an analyzer to: analyze two or more nodes in the graph by identifying respective attributes of the two or more nodes in the graph, and provide an indication of the two or more nodes that include similar respective attributes, a variation generator to generate an attack mechanism based on the indication, and a weight postulator to obtain the generated attack mechanism and, based on (A) the two or more nodes in the graph and (B) the generated attack mechanism, indicate a weight associated with a severity of the generated attack mechanism.

## Description

### FIELD OF THE DISCLOSURE

This disclosure relates generally to hardware and/or software attacks, and, more particularly, to methods and apparatus to analyze computer system attack mechanisms.

### BACKGROUND

Mechanisms to carry out attacks on hardware and/or software components of a computer system are often published via security conferences and/or other similar publication platforms. Such publication platforms (e.g., security conferences and/or other similar publication mediums) are utilized to illustrate a detailed approach of the order of tasks and/or methods used to perform such attacks. The focus of the published documents on such publication platforms (e.g., security conferences and/or other similar publication mediums) is to convey specific details pertinent to attacks as employed at such instant in time.

### BRIEF DESCRIPTION OF THE DRAWINGS

FIG. 1 is a block diagram illustrating an example system including an attack detector for determining and analyzing attack mechanisms, an example server, an example publication, and an example network.
FIG. 2A is a graphical illustration of an example graph that may be generated by the graph generator of FIG. 1.
FIG. 2B is a graphical illustration of an additional example graph that may be generated by the graph generator of FIG. 1.
FIG. 3 is a block diagram illustrating the technique substitution controller of FIG. 1.
FIG. 4 is a block diagram illustrating the weight postulator of FIG. 1.
FIG. 5 is a block diagram illustrating the objective substitution controller of FIG. 1.
FIG. 6 is a block diagram illustrating the context phrase controller of FIG. 1.
FIG. 7 is a flowchart representative of example machine readable instructions which may be executed to implement the graph generator of FIG. 1.
FIG. 8 is a flowchart representative of example machine readable instructions which may be executed to implement the technique substitution controller of FIGS. 1 and 3.
FIG. 9 is a flowchart representative of example machine readable instructions which may be executed to implement the weight postulator of FIGS. 1 and 4.
FIG. 10 is a flowchart representative of example machine readable instructions which may be executed to implement the objective substitution controller of FIGS. 1 and 5.
FIG. 11 is a flowchart representative of example machine readable instructions which may be executed to implement the context phrase controller of FIGS. 1 and 6.
FIG. 12 is a block diagram of an example processing platform structured to execute the instructions of FIGS. 7-11 to implement the attack detector of FIG. 1.

The figures are not to scale. In general, the same reference numbers will be used throughout the drawing(s) and accompanying written description to refer to the same or like parts. Connection references (e.g., attached, coupled, connected, and joined) are to be construed broadly and may include intermediate members between a collection of elements and relative movement between elements unless otherwise indicated. As such, connection references do not necessarily infer that two elements are directly connected and in fixed relation to each other.

Descriptors "first," "second," "third," etc. are used herein when identifying multiple elements or components which may be referred to separately. Unless otherwise specified or understood based on their context of use, such descriptors are not intended to impute any meaning of priority, physical order or arrangement in a list, or ordering in time but are merely used as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

### DETAILED DESCRIPTION

Artificial intelligence (AI), including machine learning (ML), deep learning (DL), and/or other artificial machine-driven logic, enables machines (e.g., computers, logic circuits, etc.) to use a model to process input data to generate an output based on patterns and/or associations previously learned by the model via a training process. For instance, the model may be trained with data to recognize patterns and/or associations and follow such patterns and/or associations when processing input data such that other input(s) result in output(s) consistent with the recognized patterns and/or associations.

Many different types of machine learning models and/or machine learning architectures exist. In examples disclosed herein, word embeddings or word vector neural networks and deep learning based natural language processing models are used. Using word embeddings or word vector neural networks and deep learning based natural language processing models model enables the generation and analyzation of a graph including inter-dependencies of attack mechanism tasks. In general, machine learning models/architectures that are suitable to use in the example approaches disclosed herein will be a Graph Neural Network (GNN) that allows insight into inter-dependencies between nodes. However, other types of machine learning models could additionally or alternatively be used such as word vector type neural networks, etc.

In general, implementing a ML/AI system involves two phases, a learning/training phase and an inference phase. In the learning/training phase, a training algorithm is used to train a model to operate in accordance with patterns and/or associations based on, for example, training data. In general, the model includes internal parameters that guide how input data is transformed into output data, such as through a series of nodes and connections within the model to transform input data into output data. Additionally, hyperparameters are used as part of the training process to control how the learning is performed (e.g., a learning rate, a number of layers to be used in the machine learning model, etc.). Hyperparameters are defined to be training parameters that are determined prior to initiating the training process.

Different types of training may be performed based on the type of ML/AI model and/or the expected output. For example, supervised training uses inputs and corresponding expected (e.g., labeled) outputs to select parameters (e.g., by iterating over combinations of select parameters) for the ML/AI model that reduce model error. As used herein, labelling refers to an expected output of the machine learning model (e.g., a classification, an expected output value, etc.) Alternatively, unsupervised training (e.g., used in deep learning, a subset of machine learning, etc.) involves inferring patterns from inputs to select parameters for the ML/AI model (e.g., without the benefit of expected (e.g., labeled) outputs).

In examples disclosed herein, ML/AI models are trained using word embeddings from literature, books, papers, security publications, etc., or in other examples disclosed herein, ML/AI models are trained using annotation and relation-based techniques from literature, books, papers, security publications, etc. However, any other training algorithm may additionally or alternatively be used. In examples disclosed herein, training is performed locally on a computer architecture. Training is performed using hyperparameters that control how the learning is performed (e.g., a learning rate, a number of layers to be used in the machine learning model, etc.).

Training is performed using training data. In examples disclosed herein, the training data originates from unsupervised word embeddings or literature, books, papers, security publications, etc.

Once training is complete, the model is deployed for use as an executable construct that processes an input and provides an output based on the network of nodes and connections defined in the model. The model is stored local on a computer architecture.

Once trained, the deployed model may be operated in an inference phase to process data. In the inference phase, data to be analyzed (e.g., live data) is input to the model, and the model executes to create an output. This inference phase can be thought of as the AI "thinking" to generate the output based on what it learned from the training (e.g., by executing the model to apply the learned patterns and/or associations to the live data). In some examples, input data undergoes pre-processing before being used as an input to the machine learning model. Moreover, in some examples, the output data may undergo post-processing after it is generated by the AI model to transform the output into a useful result (e.g., a display of data, an instruction to be executed by a machine, etc.).

In some examples, output of the deployed model may be captured and provided as feedback. By analyzing the feedback, an accuracy of the deployed model can be determined. If the feedback indicates that the accuracy of the deployed model is less than a threshold or other criterion, training of an updated model can be triggered using the feedback and an updated training data set, hyperparameters, etc., to generate an updated, deployed model.

Mechanisms to carry out and/or execute hardware and/or software attacks on computer systems are often published via security conferences and/or other suitable publication mediums. Such publications are utilized to publicize a detailed description of the attack mechanism so that end users and/or creators of the hardware and/or software which was breached can mitigate such attack in future product versions and/or software update versions.

As a result, there is an interest in broadening the visibility of attacks undiscovered by the end users and/or creators of corresponding hardware and/or software devices. In an example, the publication of a certain attack mechanism may inspire another attack mechanism which may have not existed at the time of the publication. Moreover, the public knowledge of such attack mechanisms creates a high degree of information overload making it difficult for one to stay current with all attacks in one's given domain. Consequently, most focus is given to the specifics of the attack mechanism being employed with respect to current hardware and/or software versions rather than possible (e.g., future) variations of such attack mechanisms that may render current hardware and/or software mitigation techniques unsuitable.

In prior mitigation techniques, an individual, or group of individuals, may intentionally carry out explorations of a new attack mechanism (e.g., unknown attack mechanism). In such prior mitigation techniques, efforts are limited to the individual expertise of the individual or group of individuals carrying out the exploration. Even more so, prior mitigation techniques often include a lack of comprehensive security tools to organize and/or otherwise prioritize possible new attack mechanisms.

Examples disclosed herein include methods, apparatus, and articles of manufacture to determine possible variations in known and/or newly known attack mechanisms. In such examples disclosed herein, existing knowledge with regard to previously known attack mechanisms (e.g., attack mechanisms published and/or otherwise discovered in the past) is combined with new knowledge of an attack mechanism (e.g., knowledge of an attack mechanism recently published via a suitable publication medium) to generate, determine, and/or otherwise hypothesize new attack mechanisms.

Examples disclosed herein include generating a graph based on the existing knowledge and new knowledge of attack mechanisms. In such examples disclosed herein, the graph illustrates the steps and/or tasks involved in carrying out and/or otherwise executing an attack mechanism. In examples disclosed herein, the graph represents a relationship map between attack mechanisms. The graph described in examples disclosed herein includes nodes and edges and may be derived, created and/or otherwise generated by processing reports (e.g., a security conference publication, a PowerPoint presentation, a word document, a portable document format (PDF) file, a transcript of a video presentation, etc.) provided via publication mediums. Similarly, in examples disclosed herein, the graph may illustrate relationships called type-of relationships (e.g., taxonomic relationships) which may be used to distinguish the various attack mechanisms.

Examples disclosed herein include methods and apparatus to generate, discover, and/or otherwise hypothesize new attack mechanisms (e.g., variations of known attack mechanisms) using the graph. In examples disclosed herein, new attack mechanisms may automatically be generated, discovered, and/or otherwise hypothesized by interchanging and/or replacing at least two distinct child nodes of the graph in response to determining the parent nodes of such two child nodes are the same (e.g., the parent nodes illustrate the same objective). As such, examples disclosed herein may determine whether an attack mechanism may be executed and/or otherwise carried out utilizing a different child node. Alternatively, in some examples disclosed herein, new attack mechanisms may be automatically generated, discovered, and/or otherwise hypothesized by interchanging and/or substituting the objective of a node, rather than substituting the whole node, within the graph with the objective of another node in the graph to determine whether such attack mechanism may achieve a different objective. Additionally or alternatively, in some examples disclosed herein, new attack mechanisms may be generated, discovered, and/or otherwise hypothesized by analyzing word embeddings to determine similar words and/or phrases in the graph and to determine possible children nodes that may be able to perform the objective of a parent node.

In examples disclosed herein, a weight is assigned to the newly generated, discovered, and/or otherwise hypothesized attack mechanism. In such examples disclosed herein, the weight may be representative of any of a severity and/or likelihood of succeeding. In some examples disclosed herein, multiple weights may be assigned to the newly generated, discovered, and/or otherwise hypothesized attack mechanism. For example, there may be a determined weight for each newly generated, discovered, and/or otherwise hypothesized attack mechanism based on severity, weight based on distance between nodes, weight based on mitigation attributes, weight based on product attributes, weight based on requirement attributes, and/or any suitable weight. In such examples disclosed herein, the multiple weights may be utilized and/or otherwise combined into a single weight.

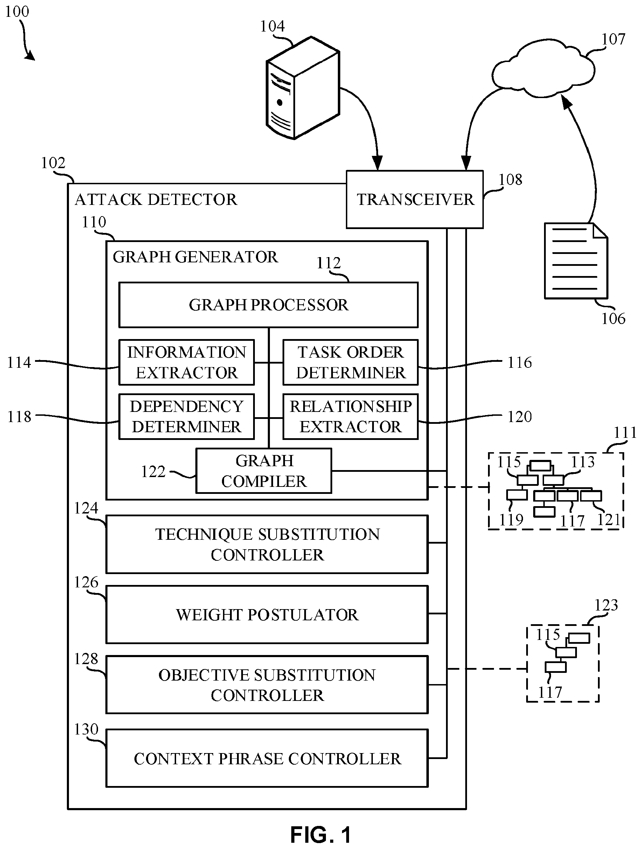

FIG. 1 is a block diagram illustrating an example system 100 including an attack detector 102 for determining and analyzing attack mechanisms, an example server 104, an example publication 106, and an example network 107. The attack detector 102 includes an example transceiver 108, and example graph generator 110, an example technique substitution controller 124, an example weight postulator 126, an example objective substitution controller 128, and an example context phrase controller 130. The graph generator 110 includes an example graph processor 112, an example information extractor 114, an example task order determiner 116, an example dependency determiner 118, an example relationship extractor 120, and an example graph compiler 122.

In the example illustrated in FIG. 1, the server 104 is a device and/or network of devices that manage access of the attack detector 102. In examples disclosed herein, the server 104 stores information relating to known attack mechanisms. In such examples, the server 104 communicates with the attack detector 102 to obtain information relating to an attack mechanism. The server 104 stores data and information relating to attack mechanisms that may be performed on hardware and/or software computing systems. In other examples disclosed herein, the server 104 may communicate with the attack detector 102 to provide data and/or information relating to the known attack mechanisms so that the attack detector 102 can determine and/or otherwise analyze new attack mechanisms (e.g., variations of the known attack mechanisms). In some examples disclosed herein, the server 104 may be implemented by any suitable computing system and/or computing device capable of communicating with the attack detector 102 and/or providing information and/or data to and/or from the attack detector 102.

In FIG. 1, the example publication 106 is a document and/or file (e.g., a security conference publication, a PowerPoint presentation, a word document, a portable document format (PDF) file, etc.). In addition, the publication 106 could also be a transcript of a video presentation. Such a transcript may be determined using any suitable method of video and/or audio to text. In examples disclosed herein, the publication 106 includes information relating to an attack mechanism. In further examples disclosed herein, the publication 106 includes information relating to an attack mechanism that is not known by the attack detector 102 and/or the server 104. In examples disclosed herein, the publication 106 may be communicated and/or otherwise sent to the attack detector 102 (e.g., to the transceiver 108) and/or server 104 via wireless communication, wired communication, and/or any suitable communication method (e.g., satellite communication) through the network 107. In other examples disclosed herein, the publication 106 may be sent directly to the transceiver 108 of the attack detector 102.

In addition, the publication 106 may automatically be pulled and/or otherwise fetched by the attack detector 102. In such an example, the attack detector 102 may be subscribe to feeds of various publications to be notified when new content (e.g., an additional publication) is available. Alternatively, the attack detector 102 may be configured to automatically poll known websites and/or media providers for new content (e.g., an additional publication). In such examples disclosed herein, the attack detector 102 may automatically pull and/or otherwise fetch the publication 106.

The example transceiver 108 of the illustrated example of FIG. 1 is implemented by a WiFi radio that communicates to the server 104 and/or the network 107. In some examples, the transceiver 108 facilitates wired communication via an Ethernet network with the server 104 and/or the network 107. In other examples disclosed herein, any other type of wireless transceiver may additionally or alternatively be used to implement the transceiver 108.

In the example illustrated in FIG. 1, the graph generator 110 includes the graph processor 112, the information extractor 114, the task order determiner 116, the dependency determiner 118, the relationship extractor 120, and the graph compiler 122 to generate and/or otherwise create an example graph 111 representational of the known attack mechanisms and new attack mechanisms (e.g., the attack mechanisms defined in the publication 106). In examples disclosed herein, the graph generator 110 is implemented by a processing system utilizing a natural language processing model. For example, the graph generator 110 may utilize natural language processing techniques to analyze the meaning and/or task order of the attack mechanism provided in the publication 106. In other examples disclosed herein, the graph generator 110 may generate the graph 111 utilizing any suitable means of graph generation. Alternatively, the graph generator 110 may obtain the graph 111 from a user input in which the graph has been derived via user knowledge.

In FIG. 1, the example graph processor 112 communicates with the transceiver 108 to determine whether to generate a graph. For example, the graph processor 112 may process incoming information originating from the network 107 (e.g., the publication document 106), and determine the dependencies to create the graph 111. In other examples disclosed herein, the graph processor 112 may communicate with the server 104 to obtain a previous version of the graph 111 (e.g., an example graph that is stored in the server 104 that is a derivative and/or earlier version of the graph 111) in order to update and/or otherwise add on new information included in the publication 106. In examples disclosed herein, the determination of whether to generate a graph may reference updating a previous version of a graph and/or generating a new graph (e.g., the graph 111). The graph processor 112 may determine to construct the graph 111 utilizing deep learning-based information extraction (e.g., scientific knowledge graph construction SciIE) and/or based on relationship extraction via natural language processing models such as Spacey, CoreNLP, and/or any suitable model.

In the example of FIG. 1, if the example information extractor 114 is operable to extract information from the publication 106. For example, the information extractor 114 may extract a list of tasks (e.g., a task list), operations, objectives, etc., from the publication 106. In response, the example dependency determiner 118 may operate to determine dependencies of the extracted information. As a result, the graph compiler 122 compiles the graph 111 in which the tasks of known and/or new attack mechanisms are ordered based on dependencies and/or task order. In the example illustrated in FIG. 1, the information extractor 114, the dependency determiner 118, and the graph compiler 122 may be executed to generate the graph 111.

Additionally or alternatively, in FIG. 1, the task order determiner 116, the relationship extractor 120, and the graph compiler 122 may be operable to generate the graph 111. In such an example, the task order determiner 116 determines the order of operations of each task listed in the publication 106. In response, the relationship extractor 120 extracts the relationships (e.g., whether the tasks can be reordered, altered, moved, etc.). As a result, the graph compiler 122 compiles the graph 111 in which the tasks of known and/or new attack mechanisms are ordered based on dependencies and/or task order.

In the example of FIG. 1, the graph 111 generated by the graph compiler 122 includes example nodes 113, 115, 117, 119, 121 representing a technique and/or technique category that is included in the attack mechanism portrayed in the publication document 106 (e.g., the attack mechanism outlined in the publication document 106). The relationship between nodes 113, 115, 117, 119, 121 may be either a taxonomic ('type of) relation or a sub-step (method breakdown or sequence of operations where each operation is a sub-step) relationship. In examples disclosed herein, the nodes 113, 115, 117, 119, 121 of the graph 111 include attributes such as a requirement attribute, an objective attribute, and a product attribute. In further examples disclosed herein, requirement attributes refers to conditions needed for such corresponding node 113, 115, 117, 119, 121 to operate successful. Furthermore, requirement attributes may refer to a state of a program or device in which the attack mechanism may affect. In further examples disclosed herein, objective attributes refer to what the successful execution of such node 113, 115, 117, 119, 121 can achieve. For example, an objective attribute may reference performing any of remote code execution, memory disclosure, denial of service, etc. In examples disclosed herein, the objective attribute is assigned a weight (e.g., a severity score) based on the damage that is associated with achieving the objective of the objective attribute. For example, a remote code execution objective will have a higher weight (e.g., severity score) than a privilege escalation objective. In examples disclosed herein, the products attribute refers to product categories and/or specific versions that are impacted by execution of such corresponding node 113, 115, 117, 119, 121. In examples disclosed herein, a product attribute includes a persuasiveness attribute and a mitigation attribute. In such examples disclosed herein, the persuasiveness attribute refers to how widely deployed a product is in a field (i.e., how persuasive the product is in an industry). Such an example persuasiveness attribute may reference a score ranging from 0 to 1. Furthermore, in examples disclosed herein, the mitigation attribute refers to the effective completeness of mitigation and adoption levels (e.g., the more complete mitigations reference a better mitigation level). Such an example mitigation attribute may reference a score ranging from 0 to 1. In examples disclosed herein, two or more of the nodes 113, 115, 117, 119, 121 in the graph 111 may represent two or more tasks included in two or more attack mechanisms, respectively and, as such, the two or more nodes 113, 115, 117, 119, 121 in the graph may be child nodes of two or more parent nodes, respectively.

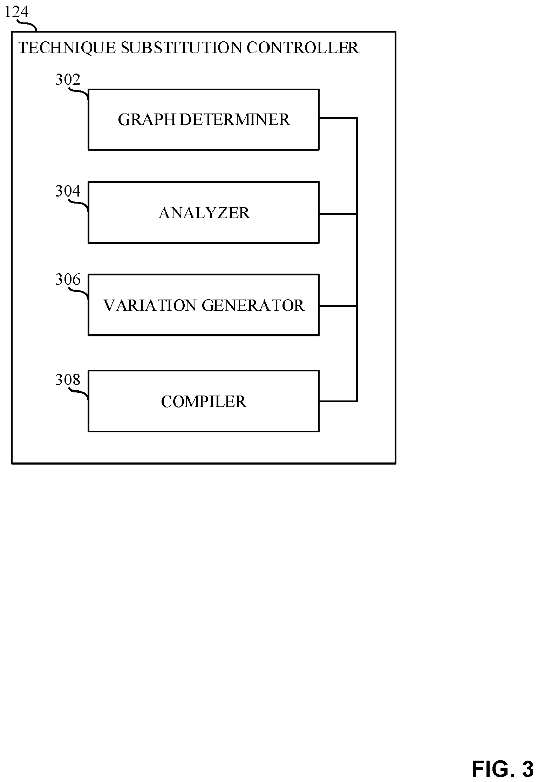

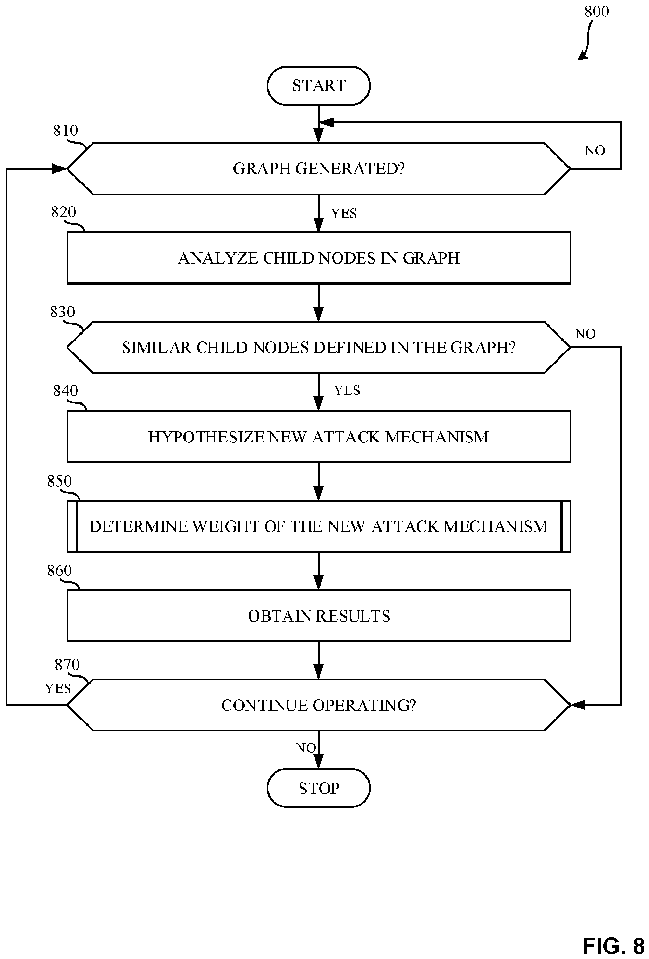

In the example illustrated in FIG. 1, the technique substitution controller 124 communicates with the graph generator 110 to analyze the nodes 113, 115, 117, 119, 121 in the newly generated and/or updated graph 111. In examples disclosed herein, the technique substitution controller 124 determines, generates, and/or otherwise hypothesizes new attack mechanisms based on the graph 111 by substituting and/or otherwise replacing a first child node of a first parent node with a second child node that is apart of a second parent node. In such an example, the first parent node and the second parent node are two distinct nodes which have the same objective attribute. Furthermore, in such an example, the node 113 may be the example first parent node 113, the node 115 may be the example second parent node 115, the node 117 may be the example first child node 117, and the node 119 may be the example second child node 119. Such a substitution may produce example new attack mechanisms 123 that are to be further analyzed by the technique substitution controller 124. In examples disclosed herein, the technique substation controller 124 communicates the determined, generated, and/or otherwise hypothesized example new attack mechanism 123 to the weight postulator 126 to determine a corresponding weight. The operation of the technique substitution controller 124 is explained in further detail below, with respect to FIGS. 3 and 8.

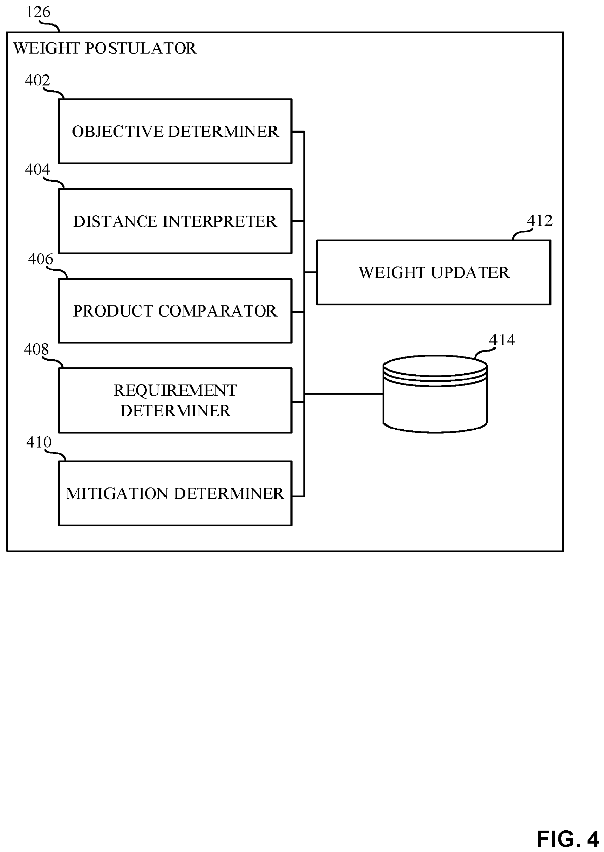

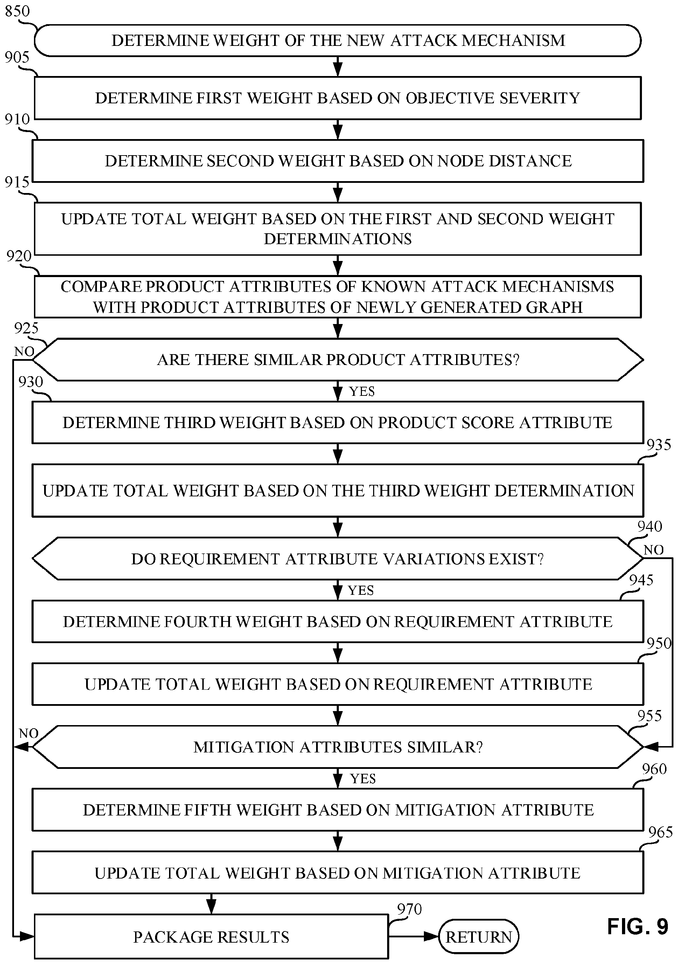

In the example illustrated in FIG. 1, the weight postulator 126 communicates with the technique substitution controller 124, the objective substitution controller 128, and/or the context phrase controller 130 to determine a weight of the resulting determined, generated, and/or otherwise hypothesized new attack mechanism 123. The operation of the weight postulator 126 is explained in further detail below, in connection with FIGS. 4 and 9.

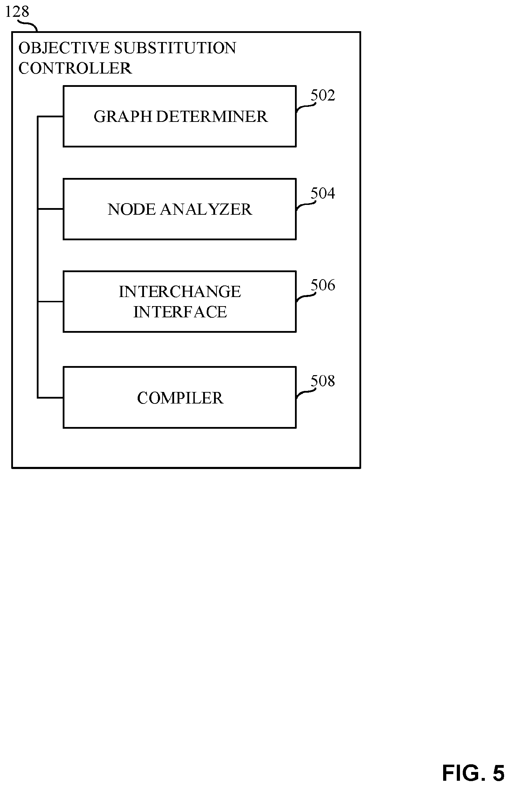

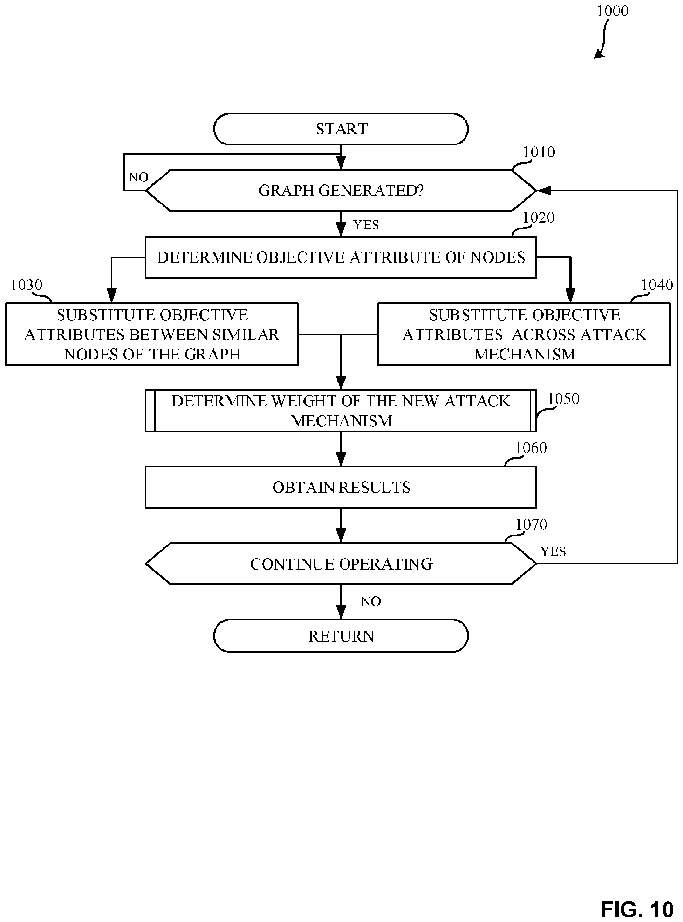

In the example illustrated in FIG. 1, the objective substitution controller 128 communicates with the graph generator 110 to analyze the nodes 113, 115, 117, 119, 121 in the newly generated and/or updated graph 111. In examples disclosed herein, the objective substitution controller 128 determines, generates, and/or otherwise hypothesizes new attack mechanisms based on the graph 111 by substituting and/or otherwise replacing nodes of a parent node with alternative nodes that are not originally present in the graph 111. Such a replacement may produce additional attack mechanisms that are to be further analyzed by the objective substitution controller 128. In examples disclosed herein, the objective substitution controller 128 communicates the determined, generated, and/or otherwise hypothesized attack mechanism 123 to the weight postulator 126 to determine a corresponding weight. The operation of objective substitution controller 128 is explained in further detail below, with respect to FIGS. 5 and 10.

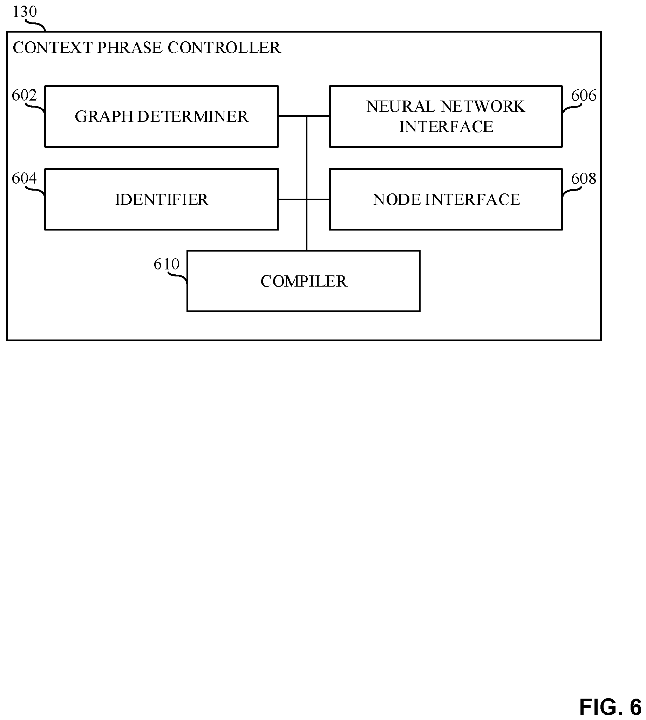

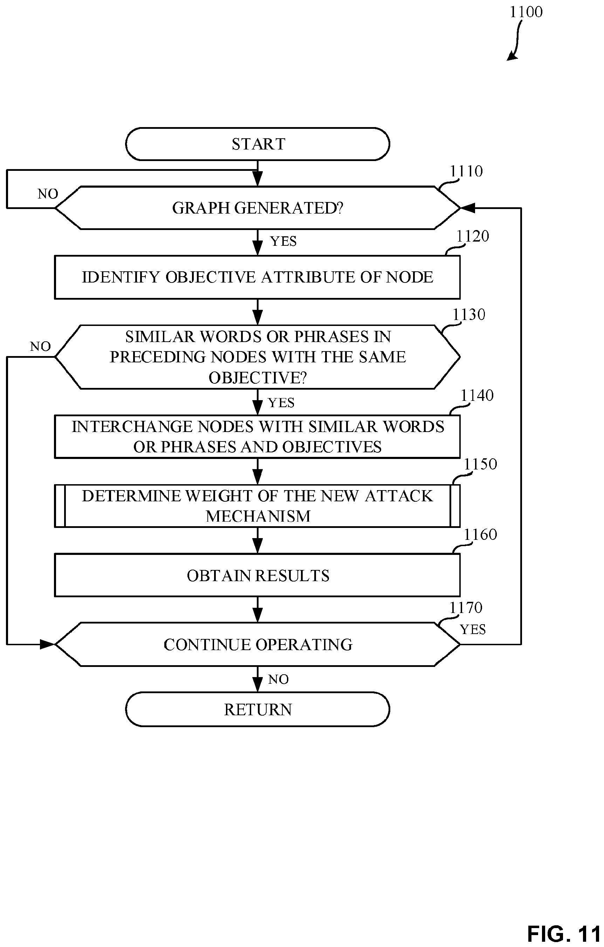

In the example illustrated in FIG. 1, the context phrase controller 130 communicates with the graph generator 110 to analyze the nodes 113, 115, 117, 119, 121 in the newly generated and/or updated graph 111. In examples disclosed herein, the context phrase controller 130 determines, generates, and/or otherwise hypothesizes the new attack mechanism 123 based on the graph by substituting and/or otherwise replacing the objective attribute of the first child node 117 of the first parent node 113 with the objective attribute of a second child node that is a part of the first parent node 113. In such an example, the node 121 may be the example second child node 121. Such a substitution of objectives across child nodes may produce additional attack mechanisms that are to be further analyzed by the context phrase controller 130. In examples disclosed herein, the context phrase controller 130 communicates such determined, generated, and/or otherwise hypothesized attack mechanism 123 to the weight postulator 126 to determine a corresponding weight. The operation of the context phrase controller 130 is explained in further detail below, with respect to FIGS. 6 and 11.

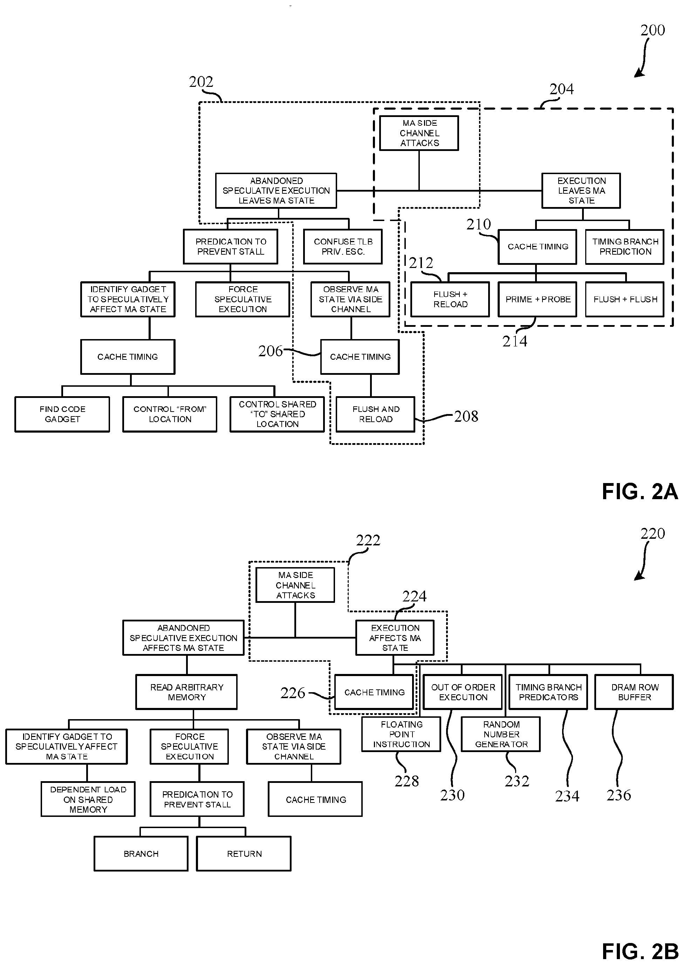

FIG. 2A is a graphical illustration of an example graph 200 that may be generated by the graph generator 110 of FIG. 1. For example, the graph 200 is a first example of the example graph 111 of FIG. 1. In other examples disclosed herein, the graph 200 may be generated by any suitable graph generation means (e.g., obtained from a user provided input, etc.). In FIG. 2A, the example graph 200 includes an example first attack mechanism 202 and an example second attack mechanism 204. Furthermore, the first attack mechanism 202 is an example previously known attack mechanism. As such, the first attack mechanism 202, among others, includes a first parent node 206 and a first child node 208. In the example illustrated in FIG. 2A, the first child node 208 operates utilizing shared memory and, as such, mitigation techniques to mitigate the first attack mechanism 202 include removing shared memory access.

In the example illustrated in FIG. 2A, the second attack mechanism 204 includes, among others, a second parent node 210, a second child node 212, and a third child node 214. In such an example, the first parent node 206 and the second parent node 210 indicate the same operation (e.g., "Cache timing"). As indicated by the first attack mechanism 202, the first parent node 206 may be executed using the first child node 208 (e.g., "flush and reload"). As indicated by the second attack mechanism 204, the second child node 210 may be executed using either the second child node 212 (e.g., "flush and reload") or the third child node 214 (e.g., "prime and probe"). In examples disclosed herein, the third child node 214 (e.g., "prime and probe") may execute without utilizing shared memory. As such, the attack detector 102 of FIG. 1 may generate, determine, and/or otherwise hypothesize a new attack mechanism by replacing the first child node 208 with the third child node 214. As such, a possible attack mechanism may be able to circumvent the mitigation technique (e.g., removal of shared memory access) of the first attack mechanism 202 by performing an execution similar to the third child node 214. Such a possible attack mechanism is determined, generated, and/or otherwise provided by the attack detector 102 and analyzed under the above-mentioned parameters.

FIG. 2B is a graphical illustration of an additional example graph 220 that may be generated by the graph generator 110 of FIG. 1. For example, the graph 220 is a second example of the example graph 111 of FIG. 1. In other example disclosed herein, the graph 220 may be generated by any suitable graph generation means (e.g., obtained from a user provided input, etc.). In FIG. 2B, the example graph 220 includes an example primary attack mechanism 222. Furthermore, the primary attack mechanism 222 is an example previously known attack mechanism. As such, the primary attack mechanism 222, among others, includes an example parent node 224 and an example first child node 226. In the example illustrated in FIG. 2B, the graph 220 includes an example first generated child node 228, an example second generated child node 230, an example third generated child node 232, an example fourth generated child node 234, and an example fifth generated child node 236.

Illustrated in FIG. 2B, the attack detector 102 identifies the first generated child node 228, the second generated child node 230, the third generated child node 232, the fourth generated child node 234, and the fifth generated child node 236 and determines, generates, and/or otherwise hypothesizes new attack mechanisms in which any of the first generated child node 228, the second generated child node 230, the third generated child node 232, the fourth generated child node 234, and/or the fifth generated child node 236 replaces the first child node 226.

FIG. 3 is a block diagram illustrating the technique substitution controller 124 of FIG. 1. The technique substitution controller 124 of includes an example graph determiner 302, an example analyzer 304, an example variation generator 306, and an example compiler 308. In FIG. 3, any of the graph determiner 302, the analyzer 304, the variation generator 306, and/or the compiler 308 may communicate with the graph generator 110 of FIG. 1 to analyze the graph 111 produced by the graph generator 110.

In FIG. 3, the graph determiner 302 determines whether the graph 111 has been generated by the graph generator 110 of FIG. 1. For example, the graph determiner 302 may communicate with the graph generator 110 to determine and/or otherwise obtain an indication illustrating that the graph 111 has been generated and, as such, obtain the graph 111. Alternatively, the graph determiner 302 may communicate with the graph generator 110 to determine that the graph 111 has not been generated (e.g., the graph 111 is non-existent) and, as such, continue to wait. In such an example if the graph determiner 302 determines, via communication with the graph generator 110, that the graph 111 has not been generated (e.g., the graph 111 is non-existent), the graph determiner 302 may indicate to obtain an old version of the graph (e.g., a derivative and/or older version of the graph 111 stored in the server 104). In examples disclosed herein, the graph determiner 302 may be implemented using any suitable controller and/or processor.

In the example illustrated in FIG. 3, the analyzer 304 analyzes the nodes 113, 115, 117, 119, 121 in the graph 111. For example, the analyzer 304 may determine that two or more nodes 113, 115, 117, 119, 121 in the graph 111 include similar objective attributes. In such an example, the analyzer 304 may transmit and/or otherwise produce an indication to the variation generator 306 indicating whether any of the nodes 113, 115, 117, 119, 121 are similar (e.g., include similar objective attributes). As such, the analyzer 304 pre-processes the graph 111 to identify the nodes 113, 115, 117, 119, 121 in the graph 111 for the variation generator 306 to utilize. In other examples disclosed herein, the analyzer 304 may determine whether any of the nodes 113, 115, 117, 119, 121 are similar based on of any suitable attribute (e.g., the product attribute, the mitigation attribute, the requirement attribute, etc.). In examples disclosed herein, the analyzer 304 may compare any node (e.g., any of the nodes 113, 115, 117, 119, 121) that includes multiple outgoing nodes (e.g., multiple child nodes) with another node (e.g., any of the nodes 113, 115, 117, 119, 121) that includes multiple output going nodes (e.g., multiple child nodes) apart of a different attack chain. As such, an indication relating to the multiple outgoing nodes (e.g., multiple child nodes) can be sent to the variation generator 306 for further processing. In examples disclosed herein, the analyzer 304 may be implemented using any suitable controller and/or processor.

In FIG. 3, the variation generator 306 communicates with the analyzer 304 to obtain and/or otherwise receive an indication of the nodes 113, 115, 117, 119, 121 of the graph 111 that are similar in a particular attribute (e.g., the objective attribute, the requirement attribute, the product attribute, the mitigation attribute, etc.). For example, the variation generator 306 may replace any of the child nodes (e.g., the child nodes 117, 119, 121) that include a similar objective attribute with each other. In such an example, the variation generator 306 generates, determines, and/or otherwise hypothesizes new attack mechanisms (e.g., the new attack mechanism 123 of FIG. 1). In addition, the variation generator 306 communicates with the analyzer 304 to obtain any suitable indication of nodes 113, 115, 117, 119, 121 of the graph 111 that are of interest (e.g., similar). In examples disclosed herein, such new attack mechanisms (e.g., the new attack mechanism 123 of FIG. 1) are sent to the weight postulator 126 of FIG. 1 in order for a weight to be determined. The example of the weight postulator 126 is explained in further detail below, in connection with FIG. 4. In examples disclosed herein, the variation generator 306 may be implemented using any suitable controller and/or processor.

In the example illustrated in FIG. 3, the compiler 308 communicates with the variation generator 306 and the weight postulator 126 to obtain the results. For example, after the variation generator 306 generates, determines, and/or otherwise hypothesizes new attack mechanisms, and after the weight postulator 126 determines a corresponding weight of such new attack mechanisms, then the compiler 308 returns a result of such corresponding weight. In examples disclosed herein, the compiler 308 may be implemented using any suitable controller and/or processor.

FIG. 4 is a block diagram illustrating the weight postulator 126 of FIG. 1. The weight postulator 126 includes an example objective determiner 402, an example distance determiner 404, an example product comparator 406, an example requirement determiner 408, an example mitigation determiner 410, an example weight updater 412, and an example weight log 414. In FIG. 4, any of the objective determiner 402, the distance determiner 404, the product comparator 406, the requirement determiner 408, the mitigation determiner 410, the weight updater 412, and/or the weight log 414 may communicate with the technique substitution controller 124, the objective phrase controller 128, and/or the context phrase controller 130 of FIG. 1 to analyze the generated, determined, and/or otherwise hypothesized attack mechanisms.

In the example illustrated in FIG. 4, the objective determiner 402 determines a severity weight associated with the new objective attribute of the new attack mechanism. For example, the newly generated, determined, and/or otherwise hypothesized attack mechanism (e.g., the attack mechanism 123 of FIG. 1) derived from any of the technique substitution controller 124, the objective substitution controller 128, and/or the context phrase controller 130 may include a new objective attribute in which the severity of such objective attribute is assigned a first weight. In examples disclosed herein, the severity of the objective attribute may be subject to a user input via the server 104. For example, in some examples disclosed herein, an objective of a distributed denial of service (DDoS) attack may be considered more severe and/or harmful than a code replacement attack. As such, the DDoS objective may be assigned a higher weight. Alternatively, in some examples disclosed herein, a code replacement attack may be considered more severe and/or harmful than a DDoS attack and, as such, the objective of a code replacement attack may be assigned a higher weight. In examples disclosed herein, the objective attribute weight is provided to the weight updater 412 to be stored in the weight log 414 and compiled into a final result. In examples disclosed herein, the objective determiner 402 may be implemented using any suitable controller and/or processor.

In the example illustrated in FIG. 4, the distance interpreter 404 determines a second weight associated with the node distance. For example, the distance interpreter 404 analyzes the newly generated, determined, and/or otherwise hypothesized attack mechanism (e.g., the attack mechanism 123 of FIG. 1) with regard to the distance traversed in order to replace the selected node. For example, if a child node (e.g., the child node 117) is replacing a second child node (e.g., the child node 119), then the distance traversed across the graph 111 may be computed and stored as a respective distance attribute weight. Further in such example, the farther traversed across the graph, the lower weight. In examples disclosed herein, the inverse of the distance between nodes is used to reduce the weight associated with the node distance. Such a distance attribute weight is sent to the weight updater 412 to be stored in the weight log 414 and compiled into the final result. In examples disclosed herein, the distance interpreter 404 may be implemented using any suitable controller and/or processor.

In the example illustrated in FIG. 4, the product comparator 406 compares the product attributes of the known attack mechanisms with the product attributes of the newly generated graph (e.g., the graph 111 including the new attack mechanisms). As a result, the product comparator 406 determines whether there exists product attribute variations in the two versions (e.g., the known attack mechanism and the newly known attack mechanisms). In examples disclosed herein, if a similar product attribute is determined between the known attack mechanisms and the newly known attack mechanisms, then the product comparator 406 increments the product weight for every node including a product attribute that existed in the known attack mechanism. For example, if a product attribute is similar between the known attack mechanism and the new attack mechanism, then the product attribute weight is increased for the known attack mechanisms because the new attack mechanism may be able to affect it. Alternatively, if there exists product attribute variations, then the product comparator determines the product attribute weight indicating new product attributes are affected. For example, if a new attack mechanism affects a new version of a hardware and/or software computing system, then the product comparator 406 may assign a higher weight because of the increased effectiveness. Such a product attribute weight is sent to the weight updater 412 to be stored in the weight log 414 and compiled into the final result. In examples disclosed herein, the product comparator 406 may be implemented using any suitable controller and/or processor.

In the example illustrated in FIG. 4, the requirement determiner 408 compares the requirement attributes of the known attack mechanisms with the requirement attributes of the newly generated graph (e.g., the graph 111 including the new attack mechanisms). As a result, the requirement determiner 408 determines whether there exists requirement attribute variations in the two versions (e.g., the known attack mechanism and the newly known attack mechanisms). In examples disclosed herein, if a similar requirement attribute is determined between the known attack mechanisms and the newly known attack mechanisms, then the requirement determiner 408 increments the requirement weight for every node including a requirement attribute that existed in the known attack mechanism. For example, if a requirement attribute is similar between the known attack mechanism and the new attack mechanism, then the requirement attribute weight is increased for the known attack mechanisms because the new attack mechanism may be able to affect it. Such a requirement attribute weight is sent to the weight updater 412 to be stored in the weight log 414 and compiled into the final result. In examples disclosed herein, the requirement determiner 408 may be implemented using any suitable controller and/or processor.

In the example illustrated in FIG. 4, the mitigation determiner 410 determines, for every node which shares a similar product, whether the mitigation attributes are similar. If not, then the mitigation determiner 410 increases a mitigation attribute weight because the new attack mechanism may be able to circumvent the current, different mitigation attribute. Such a mitigation attribute weight is sent to the weight updater 412 to be stored in the weight log 414 and compiled into the final result. In some examples disclosed herein, a node in a new attack mechanism may have a different mitigation attribute weight and/or requirement attribute weight. In such an example, the mitigation attribute weight and/or requirement attribute weight may not affect the final result. In examples disclosed herein, the mitigation determiner 410 may be implemented using any suitable controller and/or processor.

In the example illustrated in FIG. 4, the example weight updater 412 communicates with the objective determiner 402, the distance interpreter 404, the product comparator 406, the requirement determiner 408, and/or the mitigation determiner 410 to obtain the objective attribute weight, the distance attribute weight, the product attribute weight, the requirement attribute weight, and the mitigation attribute weight, respectively. In examples disclosed herein, the weight updater 412 stores the objective attribute weight, the distance attribute weight, the product attribute weight, the requirement attribute weight, and the mitigation attribute weight in the weight log 414. In some examples disclosed herein, the weight updater 412 may distinguish the objective attribute weight, the distance attribute weight, the product attribute weight, the requirement attribute weight, and the mitigation attribute weight from each other such that the individual weights may be analyzed. Alternatively, the weight updater 412 may compile the objective attribute weight, the distance attribute weight, the product attribute weight, the requirement attribute weight, and the mitigation attribute weight into a final result (e.g., a single combined weight). The compiled weight may be associated with a severity of the generated attack mechanism. In examples disclosed herein, the weight updater 412 may be implemented using any suitable controller and/or processor.

In the example illustrated in FIG. 4, the weight log 414 may be implemented by any device for storing data such as, for example, flash memory, magnetic media, optical media, etc. Furthermore, the data stored in the example weight log 414 may be in any data format such as, for example, binary data, comma delimited data, tab delimited data, structured query language (SQL) structures, etc. In the illustrated example, the example weight log 414 stores information collected by the objective determiner 402, the distance interpreter 404, the product comparator 406, the requirement determiner 408, the mitigation determiner 410, and/or the weight updater 412.

FIG. 5 is a block diagram illustrating the objective substitution controller 128 of FIG. 1. The objective substitution controller 128 includes an example graph determiner 502, an example node analyzer 504, an example interchange interface 506, and an example compiler 508. In FIG. 5, any of the graph determiner 502, the node analyzer 504, the interchange interface 506, and/or the compiler 508 may communicate with the graph generator 110 of FIG. 1 to analyze the graph 111 produced by the graph generator 110.

Illustrated in the example of FIG. 5, the graph determiner 502 determines whether the graph 111 has been generated by the graph generator 110 of FIG. 1. For example, the graph determiner 502 may communicate with the graph generator 110 to determine and/or otherwise obtain an indication stating that the graph 111 has been generated and, as such, obtain the graph 111. Alternatively, the graph determiner 502 may communicate with the graph generator 110 to determine the graph 111 has not been generated (e.g., the graph 111 is non-existent) and, as such, continue to wait. In such an example if the graph determiner 502 determines, via communication with the graph generator 110, that the graph 111 has not been generated (e.g., the graph 111 is non-existent), the graph determiner 502 may indicate to obtain an old version of the graph (e.g., a derivative and/or older version of the graph 111 stored in the server 104). In examples disclosed herein, the graph determiner 502 may be implemented using any suitable controller and/or processor.

In FIG. 5, the example node analyzer 504 determines the objective attribute of any of the nodes 113, 115, 117, 119, 121 of the graph 111. As a result, the interchange interface 506 may perform any of a substitution of objective attributes across an attack mechanism and/or a substitution of objectives between similar nodes of the graph 111. For example, the interchange interface 506 may substitute objective attributes across an attack mechanism by propagating the various node objective attributes up and across the attack mechanism. In such an example, new attack mechanisms are formed by propagating the various node objectives to other nodes in the same attack mechanism in a breadth first fashion (e.g., to the siblings and/or other child nodes) and then then further up (e.g., to the parent and grandparent nodes). Further, in such an example disclosed herein, a new attack mechanism is generated if any of the objective of any of the nodes are being replaced. By substituting objective attributes across an attack mechanism, the same attack mechanism is utilized with alternative and/or new objective attributes.

If the interchanging interface 506 substitutes objective attributes across an attack mechanism, the corresponding weight of the new attack mechanism may be determined utilizing the weight postulator 126 of FIGS. 1 and 4. In some examples disclosed herein, the corresponding weight of the new attack mechanism may be determined by the interchange interface by adding the severity score of the new objective attribute and subtracting the distance from that starting node. In other examples disclosed herein, any suitable method of determining the corresponding weight of the new attack mechanism may be utilized.

Alternatively, the interchanging interface 506 may substitute objective attributes between similar nodes of the graph 111. In such an example, new attack mechanisms are formed by propagating the various node objectives to other nodes in the different attack mechanism. If the interchanging interface 506 substitutes objective attributes between similar nodes of the graph 111, the corresponding weight of the new attack mechanism may be determined utilizing the weight postulator 126 of FIGS. 1 and 4. In some examples disclosed herein, the corresponding weight of the new attack mechanism may be determined by the interchange interface by identifying the new objective attribute weight (e.g., the new objective attribute severity score). In examples disclosed herein, the node analyzer 504 and/or the interchange interface 506 may be implemented using any suitable controller and/or processor.

In the example illustrated in FIG. 5, the compiler 508 communicates with the interchange interface 506 and/or the weight postulator 126 to obtain the results. For example, after the interchange interface 506 generates, determines, and/or otherwise hypothesizes new attack mechanisms, and after determines a corresponding weight of such new attack mechanisms, then the compiler 508 returns a result of such corresponding weight. In examples disclosed herein, the compiler 508 may be implemented using any suitable controller and/or processor.

FIG. 6 is a block diagram illustrating the context phrase controller 130 of FIG. 1. The context phrase controller 130 includes an example graph determiner 602, an example identifier 604, an example neural network interface 606, an example node interface 608, and an example compiler 610. In FIG. 6, any of the graph determiner 602, the identifier 604, the neural network interface 606, the node interface 608, and/or the compiler 610 may communicate with the graph generator 110 of FIG. 1 to analyze the graph 111 produced by the graph generator 110.

Illustrated in the example of FIG. 6, the graph determiner 602 determines whether the graph 111 has been generated by the graph generator 110 of FIG. 1. For example, the graph determiner 602 may communicate with the graph generator 110 to determine and/or otherwise obtain an indication stating that the graph 111 has been generated and, as such, obtain the graph 111. Alternatively, the graph determiner 602 may communicate with the graph generator 110 to determine the graph 111 has not been generated (e.g., the graph 111 is non-existent) and, as such, continue to wait. In such an example if the graph determiner 602 determines, via communication with the graph generator 110, that the graph 111 has not been generated (e.g., the graph 111 is non-existent), the graph determiner 602 may indicate to obtain an old version of the graph (e.g., a derivative and/or older version of the graph 111 stored in the server 104). In examples disclosed herein, the graph determiner 602 may be implemented using any suitable controller and/or processor. In examples disclosed herein, the graph determiner 602 may be implemented using any suitable controller and/or processor.

In FIG. 6, the example identifier 604 identifies the objective attributes of the nodes 113, 115, 117, 119, 121 of the graph 111. Furthermore, with regard to an attack mechanism in the graph 111, the neural network interface 606 utilizes a neural network learning technique (e.g., word2vec, a suitable unsupervised neural network) to identify similar word and/or phrases that indicate the achieving of a given objective attribute. In such an example, the objective attribute may not be identified in any child nodes of the regarded attack mechanism. In examples disclosed herein, the neural network interface 606 embeds context in the graph 111 for the identified words and/or phrases. In examples disclosed herein, the identifier 604 and/or the neural network interface 606 may be implemented using any suitable controller and/or processor.

In FIG. 6, the example node interface 608 communicates with the neural network interface 606 to obtain and indication of the objective attribute not originally included in the regarded attack mechanism in the graph 111. As such, the node interface 608 interchanges the newly identified objective attribute with the current objective attribute of the nodes in the regarded attack mechanism in the graph 111. As such, the node interface 608 generates, determines, and/or otherwise hypothesizes new attack mechanisms while interchanging the objective attributes. In examples disclosed herein, the node interface 608 may be implemented using any suitable controller and/or processor.

In the example illustrated in FIG. 6, the compiler 610 communicates with the node interface 608 and/or the weight postulator 126 to obtain the results. For example, after the node interface 608 generates, determines, and/or otherwise hypothesizes new attack mechanisms, and after a corresponding weight of such new attack mechanisms is determined, then the compiler 610 returns a result of such corresponding weight. In examples disclosed herein, the compiler 610 may be implemented using any suitable controller and/or processor.

While an example manner of implementing the attack detector 102 of FIG. 1 is illustrated in FIGS. 1 and 3-6, one or more of the elements, processes and/or devices illustrated in FIGS. 1 and/or 3-6 may be combined, divided, re-arranged, omitted, eliminated and/or implemented in any other way. Further, the example transceiver 108, the example graph generator 110, the example technique substitution controller 124, the example weight postulator 126, the example objective substitution controller 128, the example context phrase controller 130 and/or, more generally, the example attack detector 102 of FIG. 1, the example graph processor 112, the example information extractor 114, the example task order determiner 116, the example dependency determiner 118, the example relationship extractor 120, the example graph compiler 122 and/or, more generally, the example graph generator 110 of FIG. 1, the example graph determiner 302, the example analyzer 304, the example variation generator 306, the example compiler 308 and/or, more generally, the example technique substitution controller 124 of FIGS. 1 and 3, the example objective determiner 402, the example distance determiner 404, the example product comparator 406, the example requirement determiner 408, the example mitigation determiner 410, the example weight updater 412, the example weight log 414 and/or, more generally, the example weight postulator 126 of FIGS. 1 and 4, the example graph determiner 502, the example node analyzer 504, the example interchange interface 506, the example compiler 508 and/or, more generally, the example objective substitution controller 128 of FIGS. 1 and 5, the example graph determiner 602, the example identifier 604, the example neural network interface 606, the example node interface 608, the example compiler 610 and/or, more generally, the example context phrase controller 130 of FIGS. 1 and 6, may be implemented by hardware, software, firmware and/or any combination of hardware, software and/or firmware. Thus, for example, any of the example transceiver 108, the example graph generator 110, the example technique substitution controller 124, the example weight postulator 126, the example objective substitution controller 128, the example context phrase controller 130 and/or, more generally, the example attack detector 102 of FIG. 1, the example graph processor 112, the example information extractor 114, the example task order determiner 116, the example dependency determiner 118, the example relationship extractor 120, the example graph compiler 122 and/or, more generally, the example graph generator 110 of FIG. 1, the example graph determiner 302, the example analyzer 304, the example variation generator 306, the example compiler 308 and/or, more generally, the example technique substitution controller 124 of FIGS. 1 and 3, the example objective determiner 402, the example distance determiner 404, the example product comparator 406, the example requirement determiner 408, the example mitigation determiner 410, the example weight updater 412, the example weight log 414 and/or, more generally, the example weight postulator 126 of FIGS. 1 and 4, the example graph determiner 502, the example node analyzer 504, the example interchange interface 506, the example compiler 508 and/or, more generally, the example objective substitution controller 128 of FIGS. 1 and 5, the example graph determiner 602, the example identifier 604, the example neural network interface 606, the example node interface 608, the example compiler 610 and/or, more generally, the example context phrase controller 130 of FIGS. 1 and 6 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example transceiver 108, the example graph generator 110, the example technique substitution controller 124, the example weight postulator 126, the example objective substitution controller 128, the example context phrase controller 130 and/or, more generally, the example attack detector 102 of FIG. 1, the example graph processor 112, the example information extractor 114, the example task order determiner 116, the example dependency determiner 118, the example relationship extractor 120, the example graph compiler 122 and/or, more generally, the example graph generator 110 of FIG. 1, the example graph determiner 302, the example analyzer 304, the example variation generator 306, the example compiler 308 and/or, more generally, the example technique substitution controller 124 of FIGS. 1 and 3, the example objective determiner 402, the example distance determiner 404, the example product comparator 406, the example requirement determiner 408, the example mitigation determiner 410, the example weight updater 412, the example weight log 414 and/or, more generally, the example weight postulator 126 of FIGS. 1 and 4, the example graph determiner 502, the example node analyzer 504, the example interchange interface 506, the example compiler 508 and/or, more generally, the example objective substitution controller 128 of FIGS. 1 and 5, the example graph determiner 602, the example identifier 604, the example neural network interface 606, the example node interface 608, the example compiler 610 and/or, more generally, the example context phrase controller 130 of FIGS. 1 and 6 is/are hereby expressly defined to include a non-transitory computer readable storage device or storage disk such as a memory, a digital versatile disk (DVD), a compact disk (CD), a Blu-ray disk, etc. including the software and/or firmware. Further still, the example attack detector 102 of FIG. 1 may include one or more elements, processes and/or devices in addition to, or instead of, those illustrated in FIGS. 1 and 3-6, and/or may include more than one of any or all of the illustrated elements, processes and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

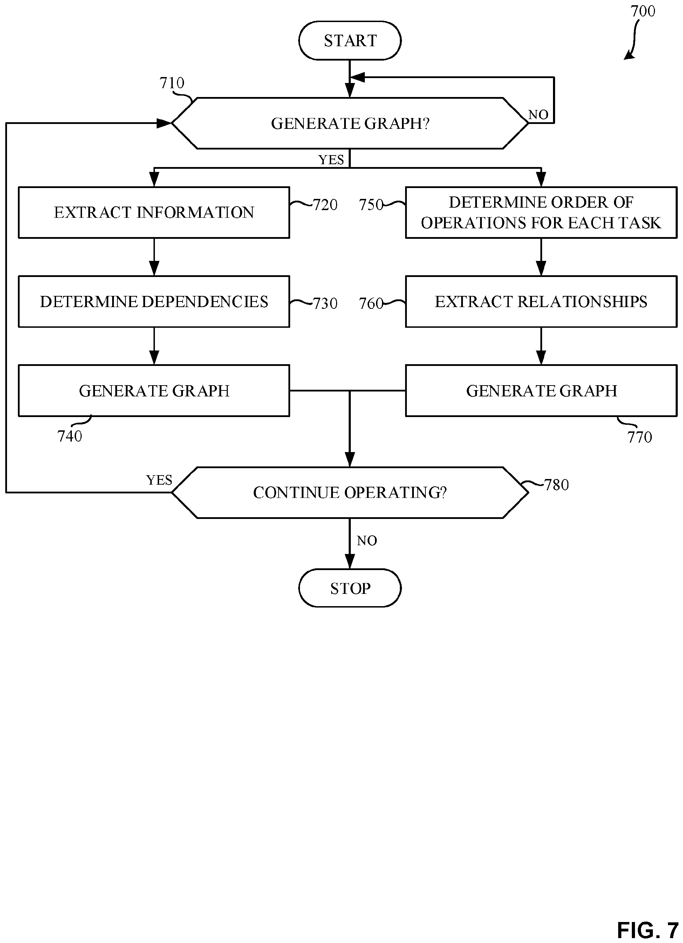

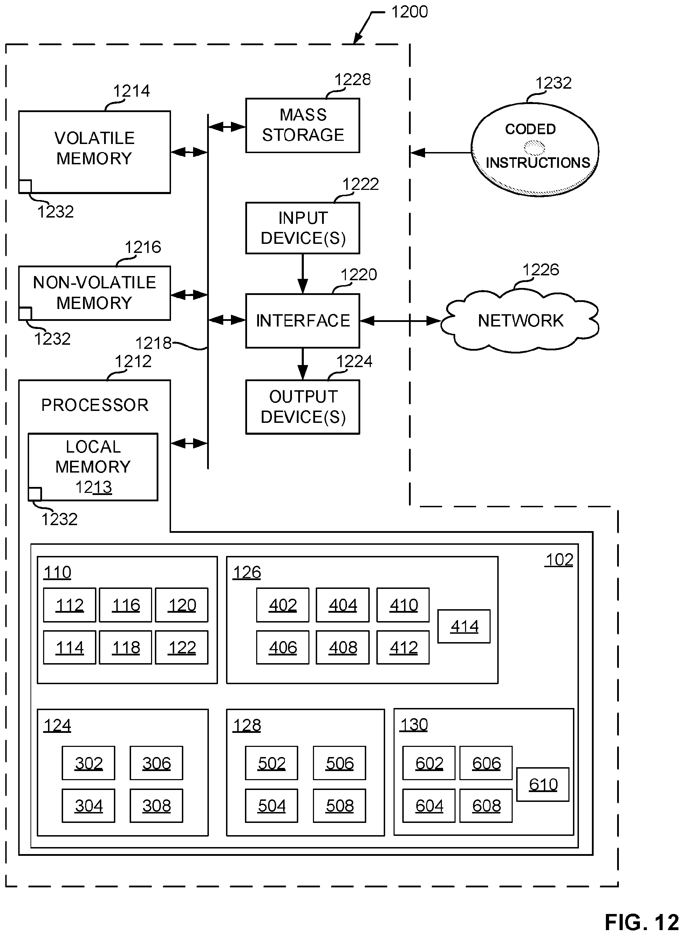

Flowcharts representative of example hardware logic, machine readable instructions, hardware implemented state machines, and/or any combination thereof for implementing the attack detector 102 of FIG. 1 are shown in FIGS. 7-11. The machine readable instructions may be one or more executable programs or portion(s) of an executable program for execution by a computer processor such as the processor 1212 shown in the example processor platform 1200 discussed below in connection with FIG. 12. The program may be embodied in software stored on a non-transitory computer readable storage medium such as a CD-ROM, a floppy disk, a hard drive, a DVD, a Blu-ray disk, or a memory associated with the processor 1212, but the entire program and/or parts thereof could alternatively be executed by a device other than the processor 1212 and/or embodied in firmware or dedicated hardware. Further, although the example program is described with reference to the flowcharts illustrated in FIGS. 7-11, many other methods of implementing the example attack detector 102 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware.

The machine readable instructions described herein may be stored in one or more of a compressed format, an encrypted format, a fragmented format, a packaged format, etc. Machine readable instructions as described herein may be stored as data (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers). The machine readable instructions may require one or more of installation, modification, adaptation, updating, combining, supplementing, configuring, decryption, decompression, unpacking, distribution, reassignment, etc. in order to make them directly readable and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement a program such as that described herein. In another example, the machine readable instructions may be stored in a state in which they may be read by a computer, but require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, the disclosed machine readable instructions and/or corresponding program(s) are intended to encompass such machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example processes of FIGS. 7-11 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

FIG. 7 is a flowchart representative of example machine readable instructions 700 which may be executed to implement the graph generator 110 of FIG. 1. In FIG. 7, the example graph processor 112 communicates with the transceiver 108 to determine whether to generate a graph (block 710). In the example illustrated in FIG. 7, the information extractor 114 may process and/or otherwise extract incoming information originating from the network 107 (e.g., the publication document 106) (block 720). In the example of FIG. 7, if the example information extractor 114 executes the control of block 720, then the example dependency determiner 118 operates to determine dependencies of the extracted information (block 730). As a result, the graph compiler 122 compiles the graph 111 in which the tasks of known and/or new attack mechanisms are ordered based on dependencies and/or task order (block 740).

Additionally or alternatively, in FIG. 7, the task order determiner 116 may determine the order of operations of each task that is listed in the publication 106 (block 750). In response, the relationship extractor 120 extracts the relationships (e.g., whether the tasks can be reordered, altered, moved, etc.) between the tasks (block 760). As a result, the graph compiler 122 compiles the graph 111 in which the tasks of known and/or new attack mechanisms are ordered based on dependencies and/or task order (block 770).

In response to either the execution of block 740 or block 770, the graph generator 110 determines whether to continue operating (block 780). In response to the control of block 780 returning YES, then control returns to block 710. Alternatively, the process stop.

FIG. 8 is a flowchart representative of example machine readable instructions 800 which may be executed to implement the technique substitution controller 124 of FIGS. 1 and 3. In FIG. 8, the graph determiner 302 determines whether the graph 111 has been generated (block 810). If the graph determiner 302 determines that the graph 111 has not been generated (e.g., control of block 810 returns NO), then control proceeds to wait. Alternatively, if the graph determiner 302 determines that the graph 111 has been generated, then control proceeds to block 820 in which the analyzer 304 analyzes the nodes 113, 115, 117, 119, 121 in the graph 111. In response, the analyzer 304 may determine whether any of the nodes 113, 115, 117, 119, 121 are similar based on of any suitable attribute (e.g., the product attribute, the mitigation attribute, the requirement attribute, etc.) (block 830). If analyzer 304 determines no similar nodes exist in the graph 111 (e.g., control of block 830 returns NO), then control proceeds to block 870.

In response the analyzer 304 determining similar nodes exist in the graph 111 (e.g., control of block 830 returns YES), then the variation generator 306 generates, determines, and/or otherwise hypothesizes new attack mechanisms (e.g., the new attack mechanism 123 of FIG. 1) (block 840). In examples disclosed herein, such new attack mechanisms (e.g., the new attack mechanism 123 of FIG. 1) are sent to the weight postulator 126 of FIG. 1 in order for a weight to be determined (block 850). The control of block 850 is explained in further detail below, in connection with FIG. 9.

In the example illustrated in FIG. 8, the compiler 308 communicates with the variation generator 306 and the weight postulator 126 to obtain the results (block 860). For example, after the variation generator 306 generates, determines, and/or otherwise hypothesizes new attack mechanisms (e.g., executes the control of block 840), and after the weight postulator 126 determines a corresponding weight of such new attack mechanisms (e.g., executes the control of block 850), then the compiler 308 returns a result of such corresponding weight.

In response to the execution of block 860, the technique substitution controller 124 determines whether to continue operating (block 870). In response to the control of block 870 returning YES, then control returns to block 810. Alternatively, the process stop.

FIG. 9 is a flowchart representative of example machine readable instructions which may be executed to implement the weight postulator 126 of FIGS. 1 and 4. Illustrated in FIG. 9, the objective determiner 402 determines a first weight associated with the new objective severity (e.g., the severity of the new objective of the new attack mechanism) (block 905). In addition, the distance interpreter 404 determines a second weight associated with the node distance (block 910). In response, the weight updater 412 updates a total weight based on the execution of control in blocks 905 and 910 (block 915).

In the example illustrated in FIG. 9, the product comparator 406 compares the product attributes of the known attack mechanisms with the product attributes of the newly generated graph (e.g., the graph 111 including the new attack mechanisms) (block 920). As a result, the product comparator 406 determines whether there exists product attribute variations in the two versions or if there are similar product attributes (e.g., the known attack mechanism and the newly known attack mechanisms) (block 925). In examples disclosed herein, if a similar product attribute is determined between the known attack mechanisms and the newly known attack mechanisms, then the product comparator 406 determines a third weight based on the product attribute (block 930). If the control executed in block 930 returns NO, then control proceeds to block 970. In response to the execution of the control of block 930, the weight updater 412 updates the total weight based on the execution of control in blocks 930 (block 935).

In response to the execution of the control of block 935, the requirement determiner 408 determines whether there exists requirement attribute variations in the two versions (e.g., the known attack mechanism and the newly known attack mechanisms) (block 940). In examples disclosed herein, if a similar requirement attribute is determined between the known attack mechanisms and the newly known attack mechanisms, then the requirement determiner 408 determines a fourth weight based on the requirement attribute (block 945). If the control executed in block 940 returns NO, then control proceeds to block 955. In response to the execution of the control of block 945, the weight updater 412 updates the total weight based on the execution of control in blocks 945 (block 950).

In the example illustrated in FIG. 9, the mitigation determiner 410 determines, for every node which shares a similar product, whether the mitigation attributes are similar (block 955). In response to the control of block 955 returning NO, then control proceeds to block 970. Alternatively, in response to the control of block 955 returning YES, then the mitigation determiner 410 determines a fifth weight based on the mitigation attribute (block 960). In response to the execution of the control of block 960, the weight updater 412 updates the total weight based on the execution of control in blocks 960 (block 965).

In response, the weight postulator 126 packages and returns the result (e.g., the total weight) (block 970).

FIG. 10 is a flowchart representative of example machine readable instructions 1000 which may be executed to implement the objective substitution controller 128 of FIGS. 1 and 5. Illustrated in the example of FIG. 10, the graph determiner 502 determines whether the graph 111 has been generated (block 1010). If the graph determiner 502 determines the graph 111 has not been generated, then control returns to block 1010 and the process waits. Alternatively, if the graph determiner 502 determines the graph 111 has been generated, then control proceeds to block 1020.

In FIG. 10, the node analyzer 504 determines the objective attribute of any of the nodes 113, 115, 117, 119, 121 of the graph 111 (block 1020). As a result, the interchange interface 506 may substitute objective attributes between similar nodes of the graph 111 (block 1030) and/or a substitute objective attributes across the attack mechanism (block 1040). In response to either the execution of block 1030 or block 1040, the interchange interface 506 communicates with the weight postulator 126 to determine a weight of the new attack mechanism(s) (block 1050).

In the example illustrated in FIG. 10, the compiler 508 communicates with the interchange interface 506 and/or the weight postulator 126 to obtain the results (block 1060).

In response to the execution of block 1060, the objective substitution controller 1028 determines whether to continue operating (block 1070). In response to the control of block 1070 returning YES, then control returns to block 1010. Alternatively, the process stop.

FIG. 11 is a flowchart representative of example machine readable instructions 1100 which may be executed to implement the context phrase controller 130 of FIGS. 1 and 6. Illustrated in the example of FIG. 11, the graph determiner 602 determines whether the graph 111 has been generated (block 1110). In response to the control of block 1110 returning NO, then control proceeds to block 1110 and waits. Alternatively, control proceeds to block 1120 in response to the control of block 1110 returning YES.

The identifier 604 identifies the objective attributes of the nodes 113, 115, 117, 119, 121 of the graph 111 (block 1120). Furthermore, the neural network interface 606 identifies whether there are similar word and/or phrases that indicate achieving a given objective attribute appear elsewhere in the attack mechanism (block 1130). In response to the control of block 1130 returning NO, then control proceeds to block 1170. Alternatively, in response to the control of block 1130 returning YES, then control proceeds to block 1140.

At block 1140, the node interface 608 interchanges the nodes that include similar words and/or phrases indicating a similar objective. In response, the node interface 608 communicates with the weight postulator 126 to determine a weight of the new attack mechanism(s) (block 1150).

In the example illustrated in FIG. 6, the compiler 610 communicates with the node interface 608 and/or the weight postulator 126 to obtain the results (block 1160). In response to the execution of block 1160, the context phrase substitution controller 130 determines whether to continue operating (block 1170). In response to the control of block 1170 returning YES, then control returns to block 1110. Alternatively, the process stop.

FIG. 12 is a block diagram of an example processor platform 1200 structured to execute the instructions of FIGS. 7-11 to implement the attack detector 102 of FIG. 1. The processor platform 1200 can be, for example, a server, a personal computer, a workstation, a self-learning machine (e.g., a neural network), a mobile device (e.g., a cell phone, a smart phone, a tablet such as an iPad™), a personal digital assistant (PDA), an Internet appliance, a DVD player, a CD player, a digital video recorder, a Blu-ray player, a gaming console, a personal video recorder, a set top box, a headset or other wearable device, or any other type of computing device.

The processor platform 1200 of the illustrated example includes a processor 1212. The processor 1212 of the illustrated example is hardware. For example, the processor 1212 can be implemented by one or more integrated circuits, logic circuits, microprocessors, GPUs, DSPs, or controllers from any desired family or manufacturer. The hardware processor may be a semiconductor based (e.g., silicon based) device. In this example, the processor implements the example transceiver 108, the example graph generator 110, the example technique substitution controller 124, the example weight postulator 126, the example objective substitution controller 128, the example context phrase controller 130 and/or, more generally, the example attack detector 102 of FIG. 1, the example graph processor 112, the example information extractor 114, the example task order determiner 116, the example dependency determiner 118, the example relationship extractor 120, the example graph compiler 122 and/or, more generally, the example graph generator 110 of FIG. 1, the example graph determiner 302, the example analyzer 304, the example variation generator 306, the example compiler 308 and/or, more generally, the example technique substitution controller 124 of FIGS. 1 and 3, the example objective determiner 402, the example distance determiner 404, the example product comparator 406, the example requirement determiner 408, the example mitigation determiner 410, the example weight updater 412, the example weight log 414 and/or, more generally, the example weight postulator 126 of FIGS. 1 and 4, the example graph determiner 502, the example node analyzer 504, the example interchange interface 506, the example compiler 508 and/or, more generally, the example objective substitution controller 128 of FIGS. 1 and 5, the example graph determiner 602, the example identifier 604, the example neural network interface 606, the example node interface 608, the example compiler 610 and/or, more generally, the example context phrase controller 130 of FIGS. 1 and 6.

The processor 1212 of the illustrated example includes a local memory 1213 (e.g., a cache). The processor 1212 of the illustrated example is in communication with a main memory including a volatile memory 1214 and a non-volatile memory 1216 via a bus 1218. The volatile memory 1214 may be implemented by Synchronous Dynamic Random Access Memory (SDRAM), Dynamic Random Access Memory (DRAM), RAMBUS® Dynamic Random Access Memory (RDRAM®) and/or any other type of random access memory device. The non-volatile memory 1216 may be implemented by flash memory and/or any other desired type of memory device. Access to the main memory 1214, 1216 is controlled by a memory controller.

The processor platform 1200 of the illustrated example also includes an interface circuit 1220. The interface circuit 1220 may be implemented by any type of interface standard, such as an Ethernet interface, a universal serial bus (USB), a Bluetooth® interface, a near field communication (NFC) interface, and/or a PCI express interface.

In the illustrated example, one or more input devices 1222 are connected to the interface circuit 1220. The input device(s) 1222 permit(s) a user to enter data and/or commands into the processor 1212. The input device(s) can be implemented by, for example, an audio sensor, a microphone, a camera (still or video), a keyboard, a button, a mouse, a touchscreen, a track-pad, a trackball, isopoint and/or a voice recognition system.

One or more output devices 1224 are also connected to the interface circuit 1220 of the illustrated example. The output devices 1024 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, a printer and/or speaker. The interface circuit 1220 of the illustrated example, thus, typically includes a graphics driver card, a graphics driver chip and/or a graphics driver processor.

The interface circuit 1220 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 1226. The communication can be via, for example, an Ethernet connection, a digital subscriber line (DSL) connection, a telephone line connection, a coaxial cable system, a satellite system, a line-of-site wireless system, a cellular telephone system, etc.

The processor platform 1200 of the illustrated example also includes one or more mass storage devices 1228 for storing software and/or data. Examples of such mass storage devices 1228 include floppy disk drives, hard drive disks, compact disk drives, Blu-ray disk drives, redundant array of independent disks (RAID) systems, and digital versatile disk (DVD) drives.

The machine executable instructions 1232 of FIGS. 7-11 may be stored in the mass storage device 1228, in the volatile memory 1214, in the non-volatile memory 1216, and/or on a removable non-transitory computer readable storage medium such as a CD or DVD

From the foregoing, it will be appreciated that example methods, apparatus and articles of manufacture have been disclosed that generate, determine, and/or otherwise hypothesize attack mechanisms that may utilizing prior knowledge of attack mechanisms and recent (e.g., new) knowledge of attack mechanisms. The disclosed methods, apparatus and articles of manufacture improve the efficiency of using a computing device by automatically fetching publication documents for use with a natural language processor to generate a corresponding graph. Examples disclosed herein include organizing and prioritizing new attack mechanisms based on a graph representative of the prior and recent (e.g., new) attack mechanisms. Moreover, examples disclosed herein, provide advantages over prior methods by enabling the analysis of attack mechanisms that may not exist and/or are not comprehendible. For example, a prior attack mechanism having been mitigated by an example mitigation technique, may be circumvented via a substitution of a newly discovered technique. In examples disclosed herein, such a newly discovered technique is analyzed along with prior attack mechanisms, to generate, determine, and/or otherwise hypothesize new attack mechanisms. In addition, examples disclosed herein include determining a weight (e.g., severity score) associated with the new generated attack mechanism indicating the severity likelihood of the new generated attack mechanism. The disclosed methods, apparatus and articles of manufacture are accordingly directed to one or more improvement(s) in the functioning of a computer.

Example methods, apparatus, systems, and articles of manufacture to analyze computer system attack mechanisms are disclosed herein. Further examples and combinations thereof include the following:
Example 1 includes an apparatus to analyze an attack mechanism, the apparatus comprising a graph generator utilizing a natural language processing model to generate a graph based on a publication, an analyzer to analyze two or more nodes in the graph by identifying respective attributes of the two or more nodes in the graph, and provide an indication of the two or more nodes that include similar respective attributes, a variation generator to generate an attack mechanism based on the indication, and a weight postulator to, based on (A) the two or more nodes in the graph and (B) the generated attack mechanism, indicate a weight associated with a severity of the generated attack mechanism.
Example 2 includes the apparatus of example 1, further including a graph determiner to determine whether the graph is generated and, in response to determining the graph is generated, transmit the graph to the analyzer.
Example 3 includes the apparatus of example 2, wherein the graph determiner is to determine the graph is generated by communicating with the graph generator.
Example 4 includes the apparatus of example 1, wherein the two or more nodes in the graph are included in two or more attack mechanisms, respectively.
Example 5 includes the apparatus of example 1, wherein the respective attributes are respective objective attributes of the two or more nodes in the graph.
Example 6 includes the apparatus of example 1, wherein the two or more nodes in the graph are child nodes of two or more parent nodes, respectively.
Example 7 includes the apparatus of example 1, wherein the generated attack mechanism is not included in the graph generated based on the publication.
Example 8 includes the apparatus of example 7, wherein the publication is at least one of a security conference publication, a PowerPoint presentation, a word document, a portable document format (PDF) file, or transcript of a video presentation.
Example 9 includes a non-transitory computer readable storage medium comprising instructions which, when executed, cause at least one processor to at least generate a graph based on a publication, analyze two or more nodes in the graph by identifying respective attributes of the two or more nodes in the graph, provide an indication of the two or more nodes that include similar respective attributes, generate an attack mechanism based on the indication, and indicate a weight associated with a severity of the generated attack mechanism, the weight based on (A) the two or more nodes in the graph and (B) the generated attack mechanism.
Example 10 includes the non-transitory computer readable storage medium of example 9, wherein the instructions, when executed, cause the at least one processor to determine whether the graph is generated and, in response to determining the graph is generated, transmit the graph to an analyzer.
Example 11 includes the non-transitory computer readable storage medium of example 10, wherein the instructions, when executed, cause the at least one processor to determine the graph is generated by communicating with a graph generator.
Example 12 includes the non-transitory computer readable storage medium of example 9, wherein the two or more nodes in the graph are included in two or more attack mechanisms, respectively.
Example 13 includes the non-transitory computer readable storage medium of example 9, wherein the respective attributes are respective objective attributes of the two or more nodes in the graph.
Example 14 includes the non-transitory computer readable storage medium of example 9, wherein the two or more nodes in the graph are child nodes of two or more parent nodes, respectively.
Example 15 includes the non-transitory computer readable storage medium of example 9, wherein the generated attack mechanism is not included in the graph generated based on the publication.
Example 16 includes the non-transitory computer readable storage medium of example 15, wherein the publication is at least one of a security conference publication, a PowerPoint presentation, a word document, a portable document format (PDF) file, or transcript of a video presentation.
Example 17 includes a method to analyze an attack mechanism, the method comprising generating a graph based on a publication, analyzing two or more nodes in the graph by identifying respective attributes of the two or more nodes in the graph, providing an indication of the two or more nodes that include similar respective attributes, generating an attack mechanism based on the indication, and indicating a weight associated with a severity of the generated attack mechanism, the weight based on (A) the two or more nodes in the graph and (B) the generated attack mechanism.
Example 18 includes the method of example 17, further including determining whether the graph is generated and, in response to determining the graph is generated, transmitting the graph to an analyzer.
Example 19 includes the method of example 18, further including determining the graph is generated by communicating with a graph generator.
Example 20 includes the method of example 17, wherein the two or more nodes in the graph are included in two or more attack mechanisms, respectively.
Example 21 includes the method of example 17, wherein the respective attributes are respective objective attributes of the two or more nodes in the graph.
Example 22 includes the method of example 17, wherein the two or more nodes in the graph are child nodes of two or more parent nodes, respectively.
Example 23 includes the method of example 17, wherein the generated attack mechanism is not included in the graph generated based on the publication.
Example 24 includes the method of example 23, wherein the publication is at least one of a security conference publication, a PowerPoint presentation, a word document, a portable document format (PDF) file, or transcript of a video presentation.
Example 25 includes an apparatus to analyze an attack mechanism, the apparatus comprising means for generating a graph based on a publication, means for analyzing two or more nodes in the graph by identifying respective attributes of the two or more nodes in the graph, and providing an indication of the two or more nodes that include similar respective attributes, means for attack mechanism generating to generate an attack mechanism based on the indication, and means for indicating a weight associated with a severity of the generated attack mechanism, the weight based on (A) the two or more nodes in the graph and (B) the generated attack mechanism. The example means for generating a graph is implemented by the graph generator 110 of FIG. 1. The example means for analyzing is implemented by the analyzer 304 of FIG. 3. The example means for attack mechanism generating is implemented by the variation generator 306 of FIG. 3. The example means for indicating a weight is implemented by the weight postulator 126 of FIG. 1.
Example 26 includes the apparatus of example 25, further including means for determining whether the graph is generated and, in response to determining the graph is generated, transmitting the graph to the analyzing means. The example means for determining whether the graph is generated is implemented by the graph determiner 302 of FIG. 3. The means for determining whether the graph is generated may be an example graph determining means or a means for graph determining.
Example 27 includes the apparatus of example 26, wherein the determining means is to determine the graph is generated by communicating with the generating means.
Example 28 includes the apparatus of example 25, wherein the two or more nodes in the graph are included in two or more attack mechanisms, respectively.
Example 29 includes the apparatus of example 25, wherein the respective attributes are respective objective attributes of the two or more nodes in the graph.
Example 30 includes the apparatus of example 25, wherein the two or more nodes in the graph are child nodes of two or more parent nodes, respectively.
Example 31 includes the apparatus of example 25, wherein the generated attack mechanism is not included in the graph generated based on the publication.
Example 32 includes the apparatus of example 31, wherein the publication is at least one of a security conference publication, a PowerPoint presentation, a word document, a portable document format (PDF) file, or transcript of a video presentation.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

## Claims

1. An apparatus to analyze an attack mechanism, the apparatus comprising:
a graph generator utilizing a natural language processing model to generate a graph based on a publication;
an analyzer to:
analyze two or more nodes in the graph by identifying respective attributes of the two or more nodes in the graph; and
provide an indication of the two or more nodes that include similar respective attributes;
a variation generator to generate an attack mechanism based on the indication; and
a weight postulator to, based on (A) the two or more nodes in the graph and (B) the generated attack mechanism, indicate a weight associated with a severity of the generated attack mechanism.

2. The apparatus of claim 1, further including a graph determiner to determine whether the graph is generated and, in response to determining the graph is generated, transmit the graph to the analyzer.

3. The apparatus of claim 2, wherein the graph determiner is to determine the graph is generated by communicating with the graph generator.

4. The apparatus of claim 1, wherein the two or more nodes in the graph are included in two or more attack mechanisms, respectively.

5. The apparatus of claim 1, wherein the respective attributes are respective objective attributes of the two or more nodes in the graph.

6. The apparatus of claim 1, wherein the two or more nodes in the graph are child nodes of two or more parent nodes, respectively.

7. The apparatus of claim 1, wherein the generated attack mechanism is not included in the graph generated based on the publication.

8. A method to analyze an attack mechanism, the method comprising:
generating a graph based on a publication;
analyzing two or more nodes in the graph by identifying respective attributes of the two or more nodes in the graph;
providing an indication of the two or more nodes that include similar respective attributes;
generating an attack mechanism based on the indication; and
indicating a weight associated with a severity of the generated attack mechanism, the weight based on (A) the two or more nodes in the graph and (B) the generated attack mechanism.

9. The method of claim 8, further including determining whether the graph is generated and, in response to determining the graph is generated, transmitting the graph to an analyzer.

10. The method of claim 9, further including determining the graph is generated by communicating with a graph generator.

11. The method of claim 8, wherein the two or more nodes in the graph are included in two or more attack mechanisms, respectively.

12. The method of claim 8, wherein the respective attributes are respective objective attributes of the two or more nodes in the graph.

13. The method of claim 8, wherein the two or more nodes in the graph are child nodes of two or more parent nodes, respectively.

14. The method of claim 8, wherein the generated attack mechanism is not included in the graph generated based on the publication.

15. A non-transitory computer readable storage medium comprising computer readable instructions that, when executed, cause at least one processor to perform the method of any of claims 8-14.
